# EUROPEAN PATENT SPECIFICATION

(11) **EP 3 971 041 B1**
(45) Date of publication and mention of the grant of the patent: **15.04.2026**
(21) Application number: 20197093.6
(22) Date of filing: 21.09.2020
(51) Int. Cl.: B60R 16/03, B60R 21/017

(54) **ECU WITH POWER SUPPLY MANAGEMENT AND METHOD FOR POWER SUPPLY OF AN ECU**
ELEKTRONISCHE STEUEREINHEIT MIT STROMVERSORGUNGSVERWALTUNG UND VERFAHREN ZUR STROMVERSORGUNG EINER ELEKTRONISCHEN STEUEREINHEIT
UNITÉ DE COMMANDE ÉLECTRONIQUE AVEC GESTION D'ALIMENTATION ÉLECTRIQUE ET PROCÉDÉ D'ALIMENTATION ÉLECTRIQUE D'UNE UNITÉ DE COMMANDE ÉLECTRONIQUE

(43) Date of publication of application: 23.03.2022
(73) Proprietor: Veoneer Sweden Safety Systems AB, 10302 Stockholm (SE)
(72) Inventor: CACLARD, Laurent, 95800 Cergy-Pontoise (FR)
(74) Representative: Reichert & Lindner Partnerschaft Patentanwälte

(56) References cited:
- DE-A1- 19 627 665
- DE-A1- 19 709 234
- FR-A1- 2 845 837
- JP-A- 2013 215 095
- JP-A- 2015 133 817
- JP-U- S6 146 621
- JP-Y2- H0 624 900

## Description

### FIELD OF THE INVENTION

The invention relates to an electronic control unit (ECU) with power supply management. The ECU comprises a control circuit which is connected via an electric connection to a vehicle battery. Furthermore, the control circuit is connected via an electric connection to an energy reserve via a diode, placed in the electric connection and the electric connection.

Furthermore, the invention relates to a method for power supply of an ECU.

### DESCRIPTION OF THE BACKGROUND ART

Airbag control units have a dedicated energy store in the form of at least one capacitor. Such an energy reserve capacity ensures the complete function of the airbag system for a predetermined period of time, even without an external power supply, for example, when the vehicle battery is disconnected in the event of a crash.

US patent application US 2015/120084 A1 discloses a method for monitoring an energy reserve for a safety device (ECU) for a vehicle. With the method it is possible to evaluate a change of a voltage present in the energy reserve between a starting value suitable for operating the safety device and a test voltage value suitable for operating the safety device to monitor the energy reserve.

As disclosed in Japanese patent JP 4053447 B2, a vehicle (such as a car), for example, carries many electronic control units (ECU). For higher operation safety, some of these ECUs need to be kept operating by supplying power from another sub power supply (for example, auxiliary battery) via a sub power supply line in the event of an abnormality occurring in a battery power supply that is the main power supply or in the supply line of this main power supply. In such a case, power can be supplied to one ECU from a main power supply line and a sub power supply line via a diode. This technique can prevent reverse flow of current from the sub power supply line to the main power supply line.

US patent application US 2019/0109479 A1 discloses a reverse current protection circuit. A diode is connected to enable a forward current flowing from a sub power supply line to the common connection node and the reverse current is prevented. The voltage drop of the main power supply, when the on-off controller applies the on-state control to the gate of the MOSFET, is lower than the voltage drop of the sub power supply through the diode.

US patent application US 2005/200202 A1 discloses power supply for electronic circuits in vehicles. The electronic circuits comprise a rush current limitation circuit, a booster circuit, a backup power supply circuit, a first wire harness and a second wire harness. An airbag control ECU is connected to the first wire harness. An engine control ECU, an electrically-driven power steering control ECU, an airconditioning control ECU and a brake control ECU are connected to the second wire harness. Thus, only one power supply circuit common to the individual vehicle control apparatus is employed in a vehicle.

FR 2 845 837 discloses a control circuit which is connected via an electric connection to a vehicle battery and connected via an electric connection to an energy reserve. Additionally, a first diode is placed in the electric connection and a second diode is placed in the electric connection. The switching of the power supply from the vehicle battery to the capacitor is carried out by a relay. A relay is not as fast as the transistors of the present invention.

JP 2015 133817 A discloses a backup power supply device which prevents voltage unevenness and fully supplies electric energy to a load circuit, when supplying electric energy from a plurality of capacitors included in the backup power supply device to the load circuit. A backup power supply device which includes capacitors charged with power received from a main power supply device and which supplies power to a load circuit from the capacitors when the power supply is stopped.

The purpose of JP 2013 215095 A is to prevent a large current from flowing into a battery block with a lower potential and to suppress power loss and heat generation in the circuit. The purpose of the present invention is to provide a circuitry which runs a power supply management which ensures an effective and continuous power supply of the ECU to guarantee the deployment of the protection devices.

### SUMMARY OF THE INVENTION

It is an object of the present invention to provide an electronic control unit (ECU) with power supply management which ensures an effective and continuous power supply of the ECU to guarantee the deployment of the protection devices controlled by the ECU.

The above object is achieved by an ECU with power supply management which comprises the features of claim 1.

It is a further object of the invention to provide a method for power supply management of an ECU which guarantees an effective and continuous power supply of the ECU during the event of a crash so that a proper deployment of the protection devices, controlled by the ECU, can be assured.

The above object is achieved by a method for power supply in an electronic control unit which comprises the features of claim 4.

According to an embodiment of the invention, an ECU for a power supply management to a control circuit comprises the control circuit which is connected via an electric connection to a vehicle battery and which is connected via another electric connection to an energy reserve. The ECU also comprises a first diode placed in the electric connection to the vehicle battery and a second diode placed in the electric connection to the energy reserve. The ECU is equipped with a first switching element. The first switching element is positioned prior to the first diode in the electric connection from the vehicle battery to the control circuit. Additionally, a second switching element is positioned prior to the second diode in the electric connection from the energy reserve to the control circuit.

The advantage of the invention is that a redundancy of the power supply (from the vehicle battery or the internal energy reserve) can cover proper deployments of protection devices. The deployment of the protection devices is assured in the case of energy reserve failure (low energy value, bad connection etc). In addition, with the invention a priority is given to the vehicle battery voltage as long as it is present. The switch to the energy reserve is carried out in case of a loss of the vehicle battery. The redundancy of the battery supply is important to cover deployments in a downgraded mode. This can be required in case of failure of the energy reserve (low voltage value, bad connection etc). There is an increasing request for this redundancy.

The switching elements may be transistors, especially field effect transistors. This switching can be done dynamically by a mechanism equivalent of the safety third switch used in ECU designs.

With the switching elements a triggering of the protection devices can be carried out during a crash. The triggering depends on the severity of the crash. The protection devices can be seat-belt pretensioners, front airbags, side airbags, knee airbags, inflatable seat-belts and the like. Accordingly, for some protection devices, like seat-belt pretensioners, the triggering can be done very early during the event of the crash, and for other protection devices it can be done at a very late stage during the event of the crash.

According to one embodiment, the control circuit comprises an asic or discreet components which are designed to make the switching elements be reactive as fast as possible. "As fast as possible" in this context means that from the time the sensors detect a crash event to the end of a crash event approximately 150 ms have passed. After 25 ms from the detection of the crash the various protection systems need to be activated. The deployment pulses have a duration included between 500µs to 3ms. If, for example, the vehicle battery disconnection happens during the ignition of the airbag, the switching to the energy reserve should be able to be done immediately. Consequently, the switching from the vehicle battery to the energy reserve needs to be carried out by some µs or tens of µs.

The advantage of the fast reactive elements is, that one can realize during the short time frame of a crash that the power supply to the control circuit is ensured during the crash as well. Additionally, the fast reactive elements help as well to give the priority to the power supply from the vehicle battery voltage as long as it is present. The switch to the energy reserve is done only if the electric connection to the vehicle battery is lost.

The switching function can also fulfill the function of voltage regulation already done by some third safety switch in the ECU design.

It is obvious that, due to the two switching elements, the ECU design has higher production costs than the design according to the prior art, but the cost increase can be balanced with a reduction in size of the energy reserve. This is only possible because of the prioritization of the power supply from the vehicle battery in the event of a crash.

The advantage of the invention is as well that the prioritization of the power supply from the vehicle battery provides additional possibilities for more deployments, in particular in case of a multiple crash event, for example a roll of the vehicle and/or a front crash. To keep the power supply from the vehicle battery as long as possible during the crash, the invention enables a secure power supply to the protection devices which need to be activated depending on the type of crash.

With the invention it is also possible to carry out the power supply to an event data recorder (EDR) from the vehicle battery. The EDR is a device or function in a vehicle that records the vehicle's dynamic time-series data during the time period just prior to a crash event (for example, vehicle velocity (v)) or during a crash event (for example, delta-v (change in velocity) over time), intended for retrieval after the crash event. Therefore, reliable power supply is required to ensure a proper deployment of the EDR. Due to the prioritization of the power supply from the vehicle battery, the energy reserve can be smaller compared to the prior art designs, which saves production costs and leaves more space in the vehicle.

### BRIEF DESCRIPTION OF THE DRAWINGS

The numerous advantages of the disclosure may be better understood by those skilled in the art by reference to the accompanying figures in which:
**Figure 1** is a schematic view illustrating a vehicle including an ECU for controlling various protection devices.
**Figure 2** is a schematic view of an ECU with a power supply management according to prior art.
**Figure 3** is a schematic view of an ECU with a power supply management according to an embodiment of the invention.
**Figure 4** is a flow diagram representing the power supply management carried out by the ECU according to an embodiment of the invention.

### DETAILED DESCRIPTION

Same reference numerals refer to same elements or elements of similar function throughout the various figures. Furthermore, only reference numerals necessary for the description of the respective figure are shown in the figures. The shown embodiments represent only examples of how the invention can be carried out. This should not be regarded as a limitation of the invention.

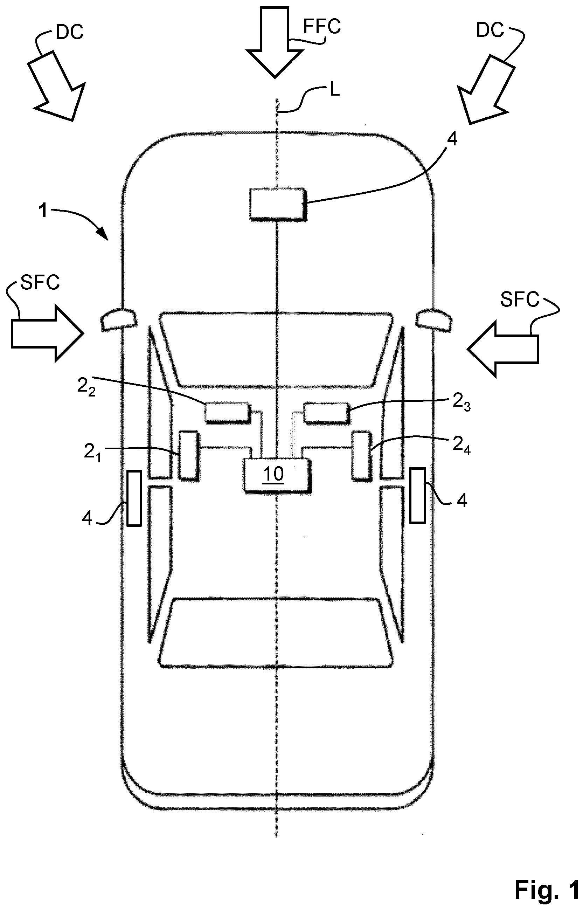

**Figure 1** is a schematic view illustrating a vehicle 1 including an ECU 10 for controlling various protection devices 2₁, 2₂,... 2_{N} for passengers (not shown) in the vehicle 1. Hereinafter, the "left" and "right" of the vehicle 1 mean the "left" and "right" of the center line L at the center in the width direction of the vehicle 1.

Preferably, the ECU 10 is placed centrally in the vehicle 1, so that a damage of the ECU 10 during a potential crash is avoided. The ECU 10 is communicatively connected to sensors 4 which sense an impact. Additionally, the sensors 4 are preferably distributed such that it is possible to sense the location of the impact. The sensors 4 may be acceleration sensors. In the embodiment shown here, the ECU 10 is electrically connected to a left side protection device 2₁, a front left protection device 2₂, a front right protection device 2₃ and a right side protection device 2₄. Although an illustration thereof has been omitted, further protection devices 2ᵢ, 5 <= i <= N can be provided for rear seats (not shown) as well.

The front left protection device 2₂ and the front right protection device 2₃ can be airbags (for example, face airbags), seat-belt pretensioners, etc., which are deployed during a front face collision FFC to protect a passenger in the driver seat and passenger seat. The left side protection device 2₁ and right side protection device 2₄ can be airbags, seat-belt pretensioners, etc., which are deployed during an offset collision (not shown), a diagonal collision DC, and a side face collision SFC to protect the passenger in the driver seat and passenger seat. The ECU 10 controls the activity of the various protection devices 2₁, 2₂,..., 2_{N}.

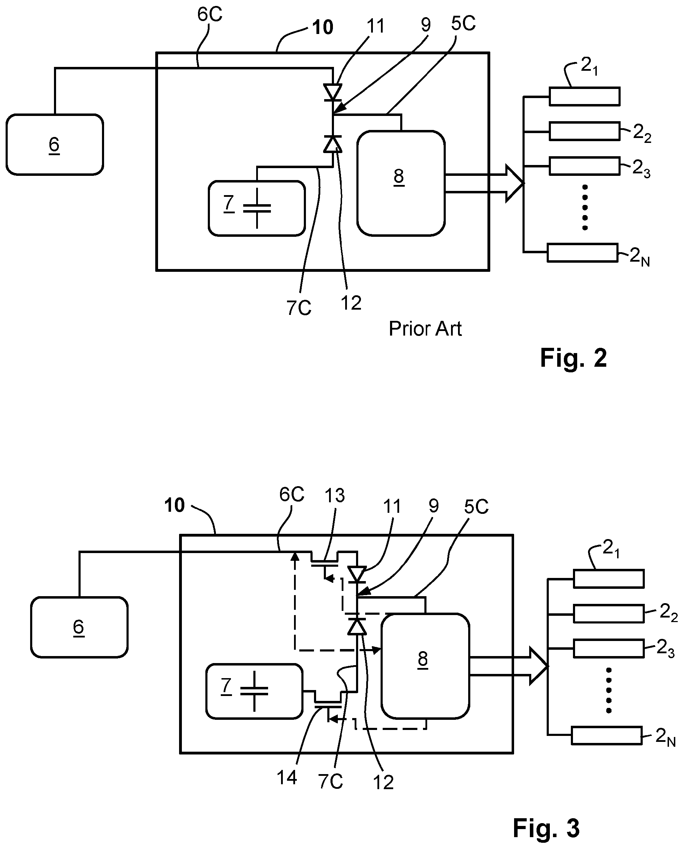

**Figure 2** is a schematic view of an embodiment of an ECU 10 with a power supply management according to prior art. The ECU 10 has a control circuit 8 connected via an electric connection 6C to a vehicle battery 6. A first diode 11 is placed in the electric connection 6C leading from the vehicle battery 6 to a node 9 and from there to the control circuit 8 of the ECU 10. Additionally, the ECU 10 is connected via an electric connection 7C to an energy reserve 7 which is part of the ECU 10. A second diode 12 is placed in the electric connection 7C, leading from the energy reserve 7 to the node 9 and from there to the control circuit 8 of the ECU 10. From the node 9 there is a common connection 5C to the control circuit 8 of the ECU 10. In the configuration as shown in the prior art, a priority for the power supply is given to the energy reserve 7 of the ECU 10. If it is requested, a backup with the vehicle battery 6 is implemented with the first and second diode 11 or 12. The purpose of the first and second diode 11 or 12 is such that provide power to the ECU 10 either from the vehicle battery of from the energy reserve 7 (OR function of the first and second diode 11 or 12). According to the prior art, a voltage of the energy reserve 7 which is higher than the voltage of the vehicle battery 6, naturally gives the priority for the power supply to the energy reserve 7. Consequently, the sizing of the energy reserve 7 is done for a specific scenario (to fulfil customer needs) but not to cover the deployment of all protection devices 2₁, 2₂,...2_{N}, which are part of a vehicle 1.

**Figure 3** is a schematic view of an ECU 10 with a power supply management according to an embodiment of the invention. According to the invention, a first switching element 13 is positioned prior to the first diode 11 in the electric connection 6C from the vehicle battery 6 to the first diode 11 of the control circuit 8. Additionally, a second switching element 14 is positioned prior to the second diode 12 in the electric connection 7C from the energy reserve 7 of the control circuit 8. From the node 9 there is a common connection 5C to the control circuit 8 of the ECU 10.

The advantage of the invention is that priority is given to the voltage of the vehicle battery 6 instead of the energy reserve 7 as in Fig. 2 of prior art. As long as the voltage of the vehicle battery 6 is present or above a defined threshold, the voltage is applied from the vehicle battery 6 to the control circuit 8. In case control circuit 8 recognizes a voltage loss of vehicle battery 6 or a voltage drop below a predefined threshold, the control circuit 8 operates the second switching element 14 in the electric connection 7C from energy reserve 7 to the second diode 12. Accordingly, the control circuit 8 receives voltage from the energy reserve 7 of the ECU 10.

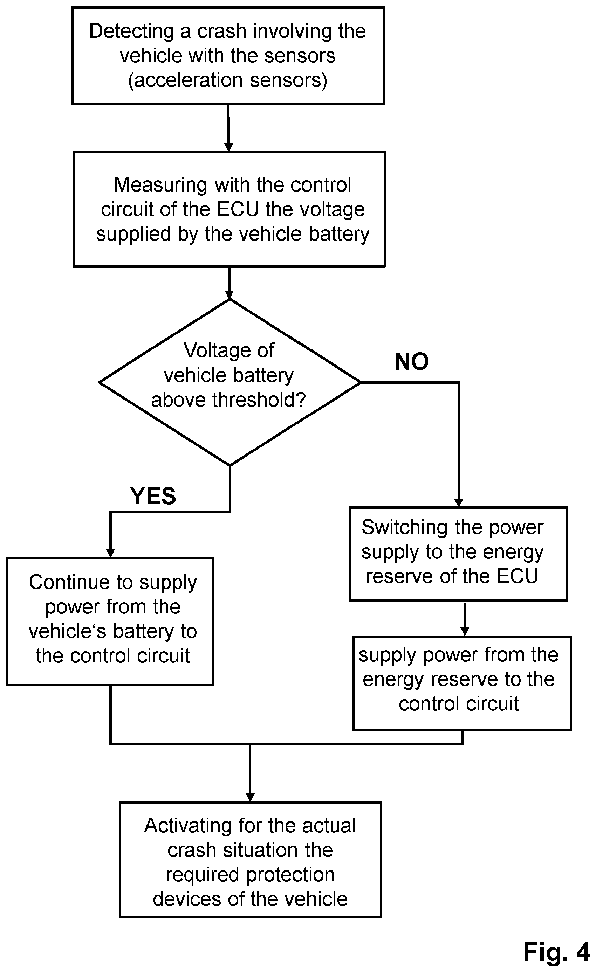

**Figure 4** is a flow diagram representing the power supply management carried out by the ECU 10 according to an embodiment of the invention. In the event of a crash, control circuit 8 of an ECU 10 has to carry out the proper deployment of the various protection devices 2₁, 2₂,...2_{N}, which are part of a vehicle 1. A crash is detected by at least one sensor 4 (for example, acceleration sensor) which are communicatively connected to the ECU 10 of vehicle 1. The control circuit 8 determines the voltage supplied by the vehicle battery 6 to the control circuit 8. The intention of the present invention is to give the priority to power supply from the vehicle battery 6.

In case the control circuit 8 determines a voltage loss (for example, since the vehicle battery 6 connection is lost) or the voltage is below a defined threshold, the control circuit 8 switches to the energy reserve 7 of the ECU 10 for a powered supply to the control circuit 8. As mentioned above, the power supply from the vehicle battery 6 along the electric connection 6C from the vehicle battery 6 to the control circuit 8 is prioritized. Once the control circuit 8 energizes the second switching element 14 in the electric connection 7C from the energy reserve 7 to the control circuit 8, the power is supplied from the energy reserve 7 to the control circuit 8.

The switching of the power supply between the vehicle battery 6 and the energy reserve 7 ensures the complete function of the various protection devices 2₁, 2₂,...2_{N}, (airbag system and pretensioners) for a predetermined period of time. The energy reserve 7 may be at least one capacitor. Such an energy reserve capacity provides energy even without the power supply from vehicle battery 6, for example, when the vehicle battery 6 is disconnected in the event of a crash.

According to one embodiment of the invention, the switching elements 13, 14 are field effect transistors (FET) which are placed in the electric connection 6C from the vehicle battery 6 to the control circuit 8 and in the electric connection 7C from the energy reserve 7 to the control circuit 8 respectively. The switching commands, applied to the field effect transistors 13, 14, are managed by the control circuit 8, which can be realized as an asic or as discreet components. The asic or the discreet components should be reactive as fast as possible to ensure the timely power supply to the control circuit 8 and finally to the various protection devices 2₁, 2₂,... 2_{N} to assure their proper function.

It is believed that the present disclosure and many of its attendant advantages will be understood by the foregoing description, and it will be apparent that various changes may be made in the form, construction and arrangement of the components without departing from the disclosed subject matter or without sacrificing all of its material advantages. The form described is merely explanatory, and it is the intention of the following claims to encompass and include such changes. Accordingly, the scope of the invention should be limited only by the claims appended hereto.

### LIST OF REFERENCE NUMERALS

- 1: vehicle
- 2₁, 2₂,... 2_{N}: protection device
- 2₁: left side protection device
- 2₂: front left protection device
- 2₃: front right protection device
- 2₄: right side protection device
- 4: sensor
- 5C: common connection
- 6: vehicle battery
- 6C: electric connection
- 7: energy reserve
- 7C: electric connection
- 8: control circuit
- 9: node
- 10: electronic control unit (ECU)
- 11: first diode
- 12: second diode
- 13: first switching element
- 14: second switching element
- DC: diagonal collision
- FFC: front face collision
- L: center line
- SFC: side face collision

## Claims

1. An electronic control unit (10) with a power supply management comprising:
a control circuit (8) connected via an electric connection (6C) to a vehicle battery (6) and connected via an electric connection (7C) to an energy reserve (7), and
a first diode (11) is placed in the electric connection (6C) and a second diode (12) is placed in the electric connection (7C),
**characterized by**
a first transistor (13) positioned prior to the first diode (11) in the electric connection (6C) from the vehicle battery (6) to the control circuit (8); and
a second transistor (14) positioned prior to the second diode (12) in the electric connection (7C) from the energy reserve (7) to the control circuit (8), wherein the control circuit (8) operates the second transistor (14) when a voltage drop of the vehicle battery (6) below a predefined threshold is recognized by the control circuit (8)

2. The electronic control unit (10) as claimed in claim 1, wherein the first and second transistors (13, 14) are field effect transistors.

3. The electronic control unit (10) as claimed in any of the preceding claims, wherein the control circuit (8) comprises an asic or discreet components which are designed to make the first and second transistors (13, 14) be reactive as fast as possible.

4. A method for power supply in an electronic control unit (10) which comprises a control circuit (8) connected via an electric connection (6C) to a vehicle battery (6) and connected via an electric connection (7C) to an energy reserve (7), wherein a first diode (11) and prior to the first diode (11) a first transistor (13) are placed in the electric connection (6C) and a second diode (12) and prior to the second diode (12) a second transistor (13) are placed in the the electric connection (7C) **characterized by** the steps of:
• sending a signal of at least one sensor (4), indicating a crash in which the vehicle (1) is involved to the control circuit (8);
• measuring with the control circuit (8) a voltage supplied by the vehicle battery (6) to the control circuit (8);
• maintaining the voltage supplied by the vehicle battery (6) as long as the voltage is above a predefined threshold; and
• switching the power supply to the energy reserve (7) of the control circuit (8) by activating the second transistor (14) positioned prior to the second diode (12) in the electric connection (7C) from the energy reserve (7) to the control circuit (8).

5. The method as claimed in claim 4, wherein the first and second transistors (13, 14) are field effect transistors, which switching status is controlled by the control circuit (8) to supply power to the control circuit (8) from the vehicle battery (6) or the energy reserve (7).

6. The method as claimed in any of the claims 4 to 5, wherein the control circuit (8) activates at least one protection device (2₁, 2₂,...2_{N}).

7. A computer program product stored on a non-transitory computer readable medium, the computer program product comprising computer readable instructions for at least one computer to control a power supply in an electronic control unit (10) to carry out the method of any of any of claims 4 to 6.

## Patentansprüche

1. Eine elektronische Steuereinheit (10) mit einer Stromversorgungsverwaltung, umfassend:
eine Steuerschaltung (8), die über eine elektrische Verbindung (6C) mit einer Fahrzeugbatterie (6) verbunden ist und über eine elektrische Verbindung (7C) mit einer Energiereserve (7) verbunden ist, und
eine erste Diode (11), die in der elektrischen Verbindung (6C) angeordnet ist, und eine zweite Diode (12), die in der elektrischen Verbindung (7C) angeordnet ist,
**gekennzeichnet durch**
einen ersten Transistor (13), der vor der ersten Diode (11) in der elektrischen Verbindung (6C) von der Fahrzeugbatterie (6) zu der Steuerschaltung (8) angeordnet ist; und
einen zweiten Transistor (14), der vor der zweiten Diode (12) in der elektrischen Verbindung (7C) von der Energiereserve (7) zu der Steuerschaltung (8) angeordnet ist, wobei die Steuerschaltung (8) den zweiten Transistor (14) betätigt, wenn ein Spannungsabfall der Fahrzeugbatterie (6) unter einen vordefinierten Schwellenwert von der Steuerschaltung (8) erkannt wird.

2. Die elektronische Steuereinheit (10) nach Anspruch 1, wobei der erste und der zweite Transistor (13, 14) Feldeffekttransistoren sind.

3. Die elektronische Steuereinheit (10) nach einem der vorangehenden Ansprüche, wobei die Steuerschaltung (8) eine anwendungsspezifische integrierte Schaltung (ASIC, Application-Specific Integrated Circuit) oder diskrete Komponenten umfasst, die so ausgelegt sind, dass der erste und der zweite Transistor (13, 14) so schnell wie möglich reaktiv sind.

4. Ein Verfahren zur Stromversorgung in einer elektronischen Steuereinheit (10), die eine Steuerschaltung (8) aufweist, die über eine elektrische Verbindung (6C) mit einer Fahrzeugbatterie (6) und über eine elektrische Verbindung (7C) mit einer Energiereserve (7) verbunden ist, wobei eine erste Diode (11) und vor der ersten Diode (11) ein erster Transistor (13) in der elektrischen Verbindung (6C) angeordnet sind und eine zweite Diode (12) und vor der zweiten Diode (12) ein zweiter Transistor (14) in der elektrischen Verbindung (7C) angeordnet sind, **gekennzeichnet durch** die folgenden Schritte:
• Senden eines Signals von mindestens einem Sensor (4), das einen Unfall anzeigt, an dem das Fahrzeug (1) beteiligt ist, an die Steuerschaltung (8);
• Messen einer von der Fahrzeugbatterie (6) an der Steuerschaltung (8) gelieferten Spannung mit der Steuerschaltung (8);
• Aufrechterhalten der von der Fahrzeugbatterie (6) gelieferten Spannung, solange die Spannung über einem vordefinierten Schwellenwert liegt; und
• Schalten der Stromversorgung zur Energiereserve (7) der Steuerschaltung (8) durch Aktivieren des zweiten Transistors (14), der vor der zweiten Diode (12) in der elektrischen Verbindung (7C) von der Energiereserve (7) zur Steuerschaltung (8) angeordnet ist.

5. Das Verfahren nach Anspruch 4, wobei der erste und der zweite Transistor (13, 14) Feldeffekttransistoren sind, deren Schaltzustand von der Steuerschaltung (8) gesteuert wird, um die Steuerschaltung (8) mit Strom von der Fahrzeugbatterie (6) oder der Energiereserve (7) zu versorgen.

6. Das Verfahren nach einem der Ansprüche 4 bis 5, wobei die Steuerschaltung (8) mindestens eine Schutzeinrichtung (2₁, 2₂, ... , 2_{N}) aktiviert.

7. Ein Computerprogrammprodukt, das auf einem nicht-übertragbaren computerlesbaren Medium gespeichert ist, wobei das Computerprogrammprodukt computerlesbare Anweisungen für mindestens einen Computer zur Steuerung einer Stromversorgung in einer elektronischen Steuereinheit (10) umfasst, um das Verfahren nach einem der Ansprüche 4 bis 6 auszuführen.

## Revendications

1. Une unité de commande électronique (10) avec gestion d'alimentation électrique comprenant :
un circuit de commande (8) connecté via une connexion électrique (6C) à une batterie de véhicule (6) et connecté via une connexion électrique (7C) à une réserve d'énergie (7), et
une première diode (11) est placée dans la connexion électrique (6C) et une deuxième diode (12) est placée dans la connexion électrique (7C),
**caractérisée par**
un premier transistor (13) positionné en amont de la première diode (11) dans la connexion électrique (6C) entre la batterie de véhicule (6) et le circuit de commande (8) ; et
un deuxième transistor (14) positionné en amont de la deuxième diode (12) dans la connexion électrique (7C) de la réserve d'énergie (7) au circuit de commande (8), dans lequel le circuit de commande (8) actionne le deuxième transistor (14) lorsqu'une chute de tension de la batterie de véhicule (6) en dessous d'un seuil prédéfini est détectée par le circuit de commande (8).

2. L'unité de commande électronique (10) selon la revendication 1, dans laquelle les premier et deuxième transistors (13, 14) sont des transistors à effet de champ.

3. L'unité de commande électronique (10) selon l'une quelconque des revendications précédentes, dans laquelle le circuit de commande (8) comprend un circuit intégré spécifique à une application (ASIC, Application-Specific Integrated Circuit) ou des composants discrets qui sont conçus pour rendre les premier et deuxième transistors (13, 14) réactifs aussi rapidement que possible.

4. Un procédé d'alimentation électrique dans une unité de commande électronique (10) qui comprend un circuit de commande (8) connecté via une connexion électrique (6C) à une batterie de véhicule (6) et connecté via une connexion électrique (7C) à une réserve d'énergie (7), dans lequel une première diode (11) et, en amont de la première diode (11), un premier transistor (13) sont placés dans la connexion électrique (6C) et une deuxième diode (12) et, en amont de la deuxième diode (12), un deuxième transistor (14) sont placés dans la connexion électrique (7C), **caractérisé par** les étapes suivantes :
• envoyer au circuit de commande (8) un signal provenant d'au moins un capteur (4) indiquant un accident impliquant le véhicule (1) ;
• mesurer avec le circuit de commande (8) une tension fournie par la batterie de véhicule (6) au circuit de commande (8) ;
• maintenir la tension fournie par la batterie de véhicule (6) tant que la tension est supérieure à un seuil prédéfini ; et
• commuter l'alimentation électrique vers la réserve d'énergie (7) du circuit de commande (8) en activant le deuxième transistor (14) positionné en amont de la deuxième diode (12) dans la connexion électrique (7C) de la réserve d'énergie (7) au circuit de commande (8).

5. Le procédé selon la revendication 4, dans lequel les premier et deuxième transistors (13, 14) sont des transistors à effet de champ, dont l'état de commutation est commandé par le circuit de commande (8) afin d'alimenter le circuit de commande (8) en électricité à partir de la batterie de véhicule (6) ou de la réserve d'énergie (7).

6. Le procédé selon l'une quelconque des revendications 4 à 5, dans lequel le circuit de commande (8) active au moins un dispositif de protection (2₁, 2₂, ... , 2_{N}).

7. Un produit de programme d'ordinateur stocké sur un support lisible par ordinateur non transitoire, le produit de programme d'ordinateur comprenant des instructions lisibles par ordinateur pour au moins un ordinateur afin de commander une alimentation électrique dans une unité de commande électronique (10) pour exécuter le procédé selon l'une quelconque des revendications 4 à 6.
